(19) **Europäisches Patentamt / European Patent Office / Office européen des brevets**

(11) **EP 2 244 484 B1**

(12) **EUROPEAN PATENT SPECIFICATION**

(45) Date of publication and mention
of the grant of the patent:
**28.03.2012 Bulletin 2012/13**

(51) Int Cl.:
**H04N 13/02** $^{(2006.01)}$

(21) Application number: **09005628.4**

(22) Date of filing: **22.04.2009**

(54) **Digital imaging method for synthesizing an image using data recorded with a plenoptic camera**

Digitales Bildgebungsverfahren zum Synthetisieren eines Bildes unter Verwendung der mit einer plenoptischen Kamera aufgezeichneten Daten

Procédé d'imagerie numérique pour synthétiser une image utilisant des données enregistrées avec une caméra plénoptique

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**27.10.2010 Bulletin 2010/43**

(73) Proprietor: **Raytrix GmbH**
**24118 Kiel (DE)**

(72) Inventor: **Perwass, Ulrich**
**51429 Bergisch-Gladbach (DE)**

(74) Representative: **Hertz, Oliver et al**
**v. Bezold & Partner**
**Patentanwälte**
**Akademiestrasse 7**
**80799 München (DE)**

(56) References cited:
**WO-A-2006/039486**

- **REN NG ET AL: "Light Field Photography with a Hand-held Plenoptic Camera" INTERNET CITATION, [Online] XP002423384 Retrieved from the Internet: URL:http://graphics.stanford.edu/papers/lfcamera/lfcamera-150dpi.pdf> [retrieved on 2007-03-06]**

EP 2 244 484 B1

**Description**

TECHNICAL FIELD

This invention relates to a method employing a camera for Radiance Photography (plenoptic camera) to produce and display pictures with varying depths of sharpness.

BACKGROUND ART

The two plenoptic camera designs published previously are:

1. The standard plenoptic camera first patented by Lippmann in 1908, which is also described in WO 2006/039 486 A and WO 2007/092581 A2 by Yi-Ren Ng et al. (see also R.Ng et al. in "Stanford Tech Report CTSR" 2005-02). The effective resolution of this plenoptic camera is the same as the number of microlenses used.

2. The "focused plenoptic camera" first described in 2008 in a technical report by Lumsdaine and Georgiev. They had previously patented their work with respect to a microlens array in July 2007 (US 2009/0041448 A1). The design described in these publications achieves a higher effective resolution. However, no theory has been presented, which allows for an analytic calculation of the achievable effective resolution of a plenoptic camera. Furthermore, the patented image rendering algorithm works by transforming the image to the frequency domain.

The theory given in this text, gives an analytic description of the effective resolution of a plenoptic camera. This allows for the design of plenoptic cameras honed for specific applications. Furthermore, this theory also gives an analytic description of multiple focus plenoptic cameras.

Object of Invention

It is an object of the invention to provide an improved method for synthesizing an image from a set of light rays.
This object is solved with a method comprising the features of claim 1. Advantageous embodiments of the invention are defined in the dependent claims.
In this text theory and a working method are presented that encompass the two plenoptic camera designs described so far in the literature. Furthermore, from the theory presented in this text a new type of plenoptic camera is derived, which uses a microlens array where the lenses have different focal lengths. This type of plenoptic camera will be called *multiple focus plenoptic camera*. This type of plenoptic camera can offer a dramatically increased effective resolution over a large depth range.

Best Mode

In the following a discussion on the theory and method is given. In this discussion the reference is taken to some figures, namely:

Figure 1    Imaging setup for a standard camera (state of the art)

Figure 2    Blurring of points not focussed onto image plane.

Figure 3    Blurring of points focussed to a virtual point behind the image plane.

Figure 4    Exemplary plot of the effective resolution ratio (ERR).

Figure 5    Plenoptic Camera. A microlens array is placed in front of the image plane.

Figure 6    Multiplicity. Relation between the number of microimages a point is pro- jected to depending on its distance from the microlens array

Figure 7    Covering of a 2D-plane by circles in an orthogonal tessellation.

Figure 8    Covering of a 2D-plane by circles in a hexagonal tessellation.

| Figure 9 | Effective resolution ratio distribution of standard plenoptic camera. *I* de- notes the image plane and *L* the microlens plane. $\varepsilon_1$ is the effective reso- lution ratio and $\Delta_r$ the relative parallax. |
|---|---|
| Figure 10 | Effective resolution ratio distribution of focused plenoptic camera with *B* ≈ **0.85mm** and *f* ≈ **0.75mm**. *I* denotes the image plane and *L* the microlens plane. $\varepsilon_1$ is the effective resolution ratio and $\Delta_r$ the relative parallax. |
| Figure11 | Mixing of microlenses of types 1 and 2 in orthogonal tessellation. |
| Figure 12 | Mixing of microlenses of types 1 and 2 in hexagonal tessellation. |
| Figure 13 | Total covering spacing between microlenses of same type in orthogonal tesselation. |
| Figure 14 | Total covering spacing between microlenses of same type in hexagonal tesselation. |
| Figure 15 | Mixing of microlenses of types 1, 2 and 3 in orthogonal tessellation. |
| Figure 16 | Mixing of microlenses of types 1, 2 and 3 in hexagonal tessellation. |
| Figure 17 | Total covering spacing between microlenses of same type in orthogonal tesselation. |
| Figure 18 | Total covering spacing between microlenses of same type in hexagonal tesselation. |
| Figure 19 | Effective resolution ratio distribution of an extended DoF multiple focus plenoptic camera with three different types of microlenses. *I* denotes the image plane and L the microlens plane. $\varepsilon_1$, $\varepsilon_2$ and $\varepsilon_3$ are the effective resolution ratios of the three types of microlenses, respectively, and $\Delta_r$ is the relative parallax. |
| Figure 20 | Effective resolution ratio distribution of a double depth multiple focus plenoptic camera with three different types of microlenses. *I* denotes the image plane and *L* the microlens plane. $\varepsilon_1$, $\varepsilon_2$ and $\varepsilon_3$ are the effective resolution ratios of the three types of microlenses, respectively, and $\Delta_r$ is the relative parallax. |
| Figure 21 | Schematic example of a plenoptic camera using two microlens arrays along the optical axis. |

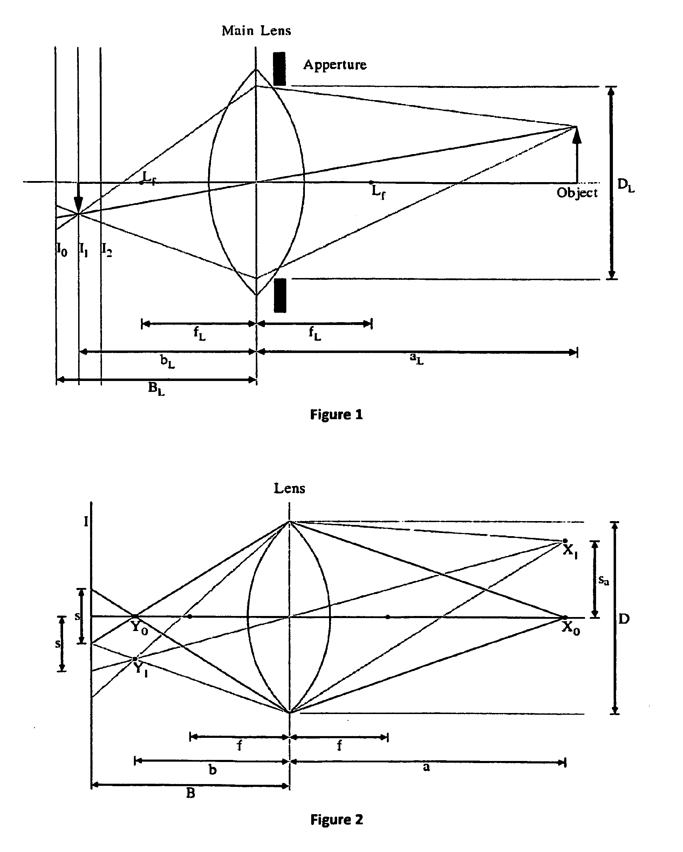

Before discussing the camera setup with microlenses, it is helpful to look at a simplified standard camera setup as shown in Figure 1. The main lens generates an image of a point on an object to its right, by focussing the various rays that emanate from that point to a single point on its left. In reality, the rays are not exactly focused to a point, but have an intensity distribution which depends on the whole imaging system. This intensity distribution is usually called the point spread function (PSF). A fairly good approximation of the spacial extent of the PSF is given by

$$s_\lambda := \lambda\, F, \qquad\qquad (1)$$

where $\lambda$ is the wavelength of the light and *F* is a measure of the amount of light that can enter the imaging system. *F* is called the *F*-number and is defined as

$$F := \frac{B_L}{D_L}. \qquad\qquad (2)$$

The position $b_L$ along the optical axis to which an object at distance $a_L$ from the lens plane is projected, can be calculated by the thin lens equation

$$\frac{1}{f_L} = \frac{1}{a_L} + \frac{1}{b_L}.$$ (3)

If, as shown in Figure 1, the plane of best focus $I_1$ does not coincide with the image plane $I_0$, the object will be blurred, as soon as the diverging projection rays are separated by more than one pixel at the image plane. This means that a standard camera only optimally focusses a single plane in object space onto its image plane. One method to increase the range in object space that generates a focussed image, is to decrease the size of the aperture, since then the projection rays diverge more slowly away from the optimal focal plane. The limit is to reduce the aperture to a single point, in which case the whole object space is in focus, but also the amount of light entering the camera is infinitesimal. In standard photography an appropriate compromise between the depth of field and the camera speed, i.e. the size of the aperture, has to be found. In the following the depth of field of a standard camera is discussed in more detail.

Figure 2 shows the blurring of point $X_0$ on the image plane $I$, when the optimally focused image $Y_0$ of $X_0$ does not lie on the image plane $I$. This observation can be translated into the concept of an *effective resolution* of the camera at a particular object separation $a$.

Since the light emanating from point $X_0$ maps to a range s on the image plane about the optical axis, $|s|$ can be regarded as the *effective pixel size* for the object plane at separation $a$ from the lens. If we assume the image plane to have the same extent $D$ as the lens, then the effective resolution is

$$N_e := \frac{D}{|s|}.$$ (4)

If $p$ denotes the pixel size, then the total resolution of the imaging chip is

$$N_t := \frac{D}{p}.$$ (5)

An *effective resolution ratio* (ERR) for a single lens can then be defined as

$$\varepsilon_L := \frac{N_e}{N_t} = \frac{p}{|s|}.$$ (6)

Using the method of similar triangles, the relation between s and a can be found from Figure 2 as

$$\frac{b}{D} = \frac{B-b}{s}$$
$$\Leftrightarrow s = D\,\frac{B-b}{b} = D\left(\frac{B}{b}-1\right)$$
$$\Leftrightarrow s = D\left(B\left(\frac{1}{f}-\frac{1}{a}\right)-1\right).$$ (7)

The ERR for a single lens $\varepsilon_L$ can therefore be written as a function of the object distance $a$ as

$$\varepsilon_L(a) := \frac{p}{\max\left[\left|D\left(B\left(\frac{1}{f}-\frac{1}{a}\right)-1\right)\right|, p\right]}.$$ (8)

This can also be written as

$$\varepsilon_L(a) := \frac{1}{\max\left[\left|N\left(B\left(\frac{1}{f}-\frac{1}{a}\right)-1\right)\right|,1\right]}, \tag{9}$$

where $N = D/p$ is the number of pixels per microlens.

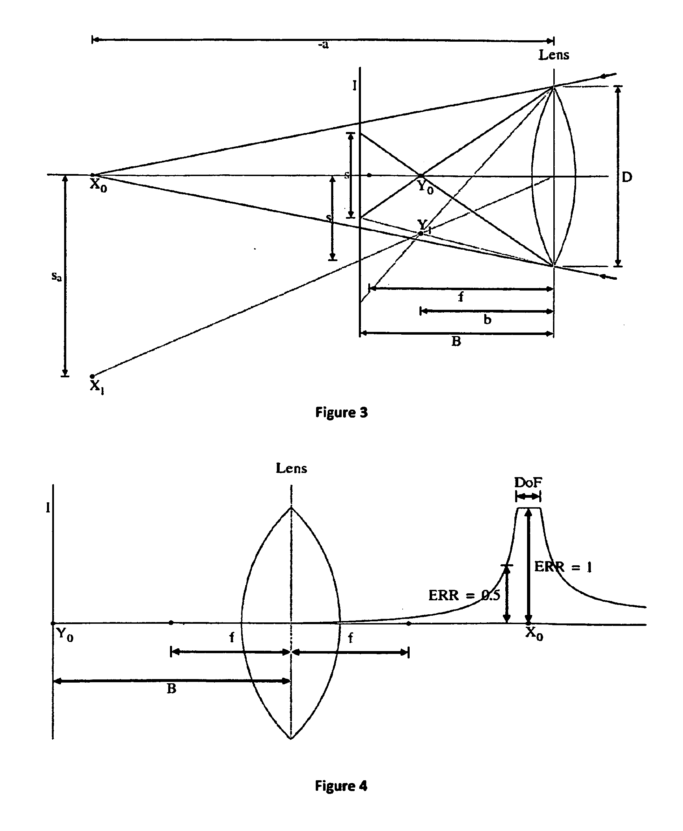

Figure 3 shows the case when an external lens focusses the light to a point $X_0$ behind the lens shown in the figure. In this case, the image $Y_0$ lies between the lens plane and the focal point. The formula for $\varepsilon_L(a)$ given in equation (8) is still valid in this case, when $a < 0$.

Note that equation (8) does not account for the effect of blurring due to diffraction, which depends on the light wavelength and the aperture as given in equation (1).

Figure 4 shows an exemplary plot of the ERR, where $B$, $D$ and $f$ are fixed and the pixel size is assumed to be $D/20$. Point $X_0$ gives the position of optimal focus and $DoF$ denotes the depth of field, where the blur is smaller than or equal to the size of a pixel.

New Plenoptic Camera

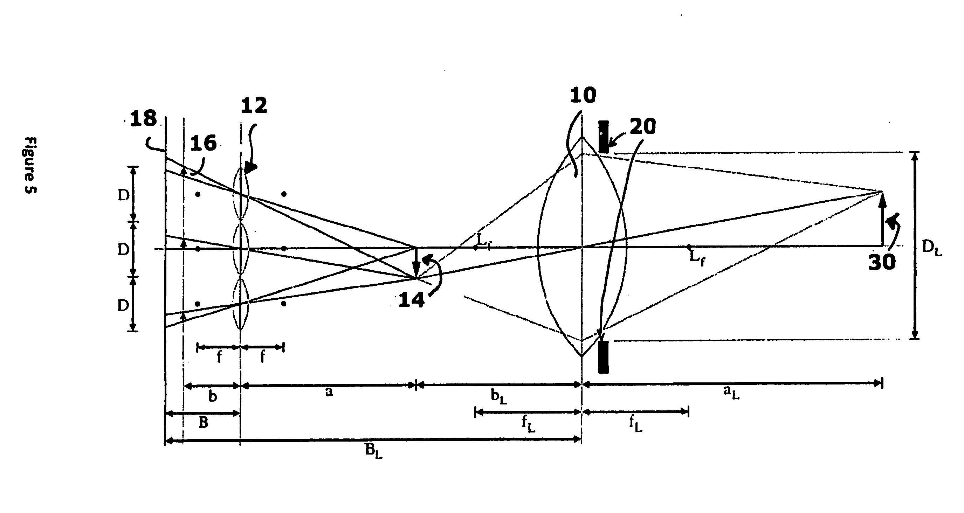

The general camera setup that will be discussed in the following is shown in Figure 5. The main lens generates an image that lies somewhere to the left of it. Note that the image may also be virtual in the sense that it is formed behind the image plane. The image of the main lens is then projected by the microlenses onto the image plane. In the following it is shown that while this setup reduces the effective resolution at each particular object distance, the effective resolution is spread out over a larger range, which allows for an extended field of depth at a larger aperture than would be possible with a standard camera.

In particular, the following differences as compared to the plenoptic camera setups by Yi-Ren Ng and Todor Georgiev are notable:

- It is shown here that by varying the focal lengths of the microlenses over the array, the overall effective resolution can be increased at the cost of parallax range as compared to a microlens array with common focal length. The described method allows for the design of plenoptic cameras to specific tasks or application areas.

- The rendering method described allows for the reconstruction of an arbitrary virtual focal surface and lends itself particularly well for an implementation of highly parallel processing.

F-Number

[0023] It is important that the images of neighbouring microlenses do not overlap. In an array of densely packed microlenses this means that the image size of the microlenses must be smaller or equal to the diameter $D$ of the microlenses. This means that,

$$\frac{B}{D} = \frac{B_L - B}{D_L} \quad \Leftarrow \quad F = F_L - \frac{B}{D_L}, \tag{10}$$

where $F$ is the F-number of the microlenses and $F_L$ the F-number of the main lens. Since typically $B = D_L$, it follows that $F \approx F_L$. That is, the F-numbers of the main imaging system and the microlens imaging system should match. Given $B$, $B_L$ and $D_L$, the maximal microlens diameter is given by

$$D = \frac{B \, D_L}{B_L - B}. \tag{11}$$

Similarly,

$$B = \frac{D \, B_L}{D_L - D}. \tag{12}$$

Image Rendering

To render the color value that would have appeared at a position **(x,y)** on an image plane which is perpendicular to the optical axis, had the image plane been placed at a distance **z** from the microlens plane along the optical axis, the following procedure is applied:

1. Find the set of microlenses which do actually see the point at **(x,y)**. These are all those microlenses whose centers fall inside a circle of radius r about the orthographic projection of **(x,y)** onto the microlens plane. The radius r is given by

$$r = \frac{z\,D}{2\,B}.$$

2. For each of these microlenses, calculate the pixel position on the image plane onto which the point $(x,y)$ is projected by the respective microlens.

3. The final color value is a weighted average of the color values on the image plane at the pixel positions calculated in the previous step. The weighting can be taken from calibration data that gives the amount of intensity attenuation at each of the pixel positions for the projection of point $(x,y,z)$.

This method allows for the reconstruction of the image on an arbitrary surface and not just a plane. This is essential for applications where curved surfaces have to be brought into focus everywhere. The desired resultant resolution can easily be set by varying the step size of the render points, which also includes super sampling.

Multiplicity

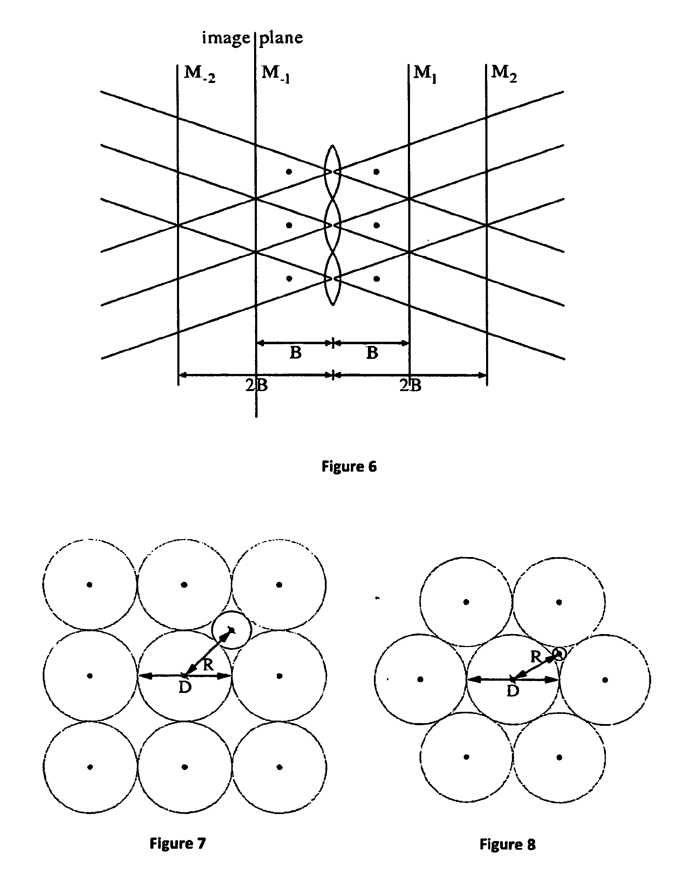

The number of lenses a test point is visible in, depends on the distance of the point from the microlens plane along the optical axis. This is shown in Figure 6. The plane $M_1$ is the right *total covering limit,* which means that all points on or to the right of plane $M_1$ have an image in at least one microimage. The plane $M_{-1}$, which is also the image plane, is the left total covering limit, i.e. all point on or to the left of plane $M_{-1}$ have an image in at least one microimage. Plane $M_2(M_{-2})$ is the double covering limit, which means that all points on or to the right (to the left) of plane $M_2(M_{-2})$ have an image in at least two microimages.
It becomes clear from Figure 6 that if the central lens is removed, the total covering limits are now $M_2$ and $M_{-2}$. *It is important to note that removing the central lens has no effect on the ability to render an image for points outside the total covering limit planes.* What is reduced is the amount of possible parallax, as will be shown later on.
For a 1D-array of microlenses the multiplicity M of a point at distance a from the microlens plane can be defined as $M := |a|/B.$ For a 2D-microlens array an additional factor is introduced in the formula for $M$, which accounts for the gaps that appear in the tesselation of a plane with circles. The only two regular tessellations that exist in 2D are the orthogonal pattern shown in Figure 7 and the hexagonal pattern shown in Figure 8 . In both figures R denotes the largest distance a point on the plane can have from its nearest surrounding microlens centers. For the orthogonal case it can be shown that

$$R_o = \frac{D}{\sqrt{2}}. \tag{13}$$

For the hexagonal case it can be shown that

$$R_h = \frac{D}{2}\sqrt{1 + tan^2(\pi/6)}. \tag{14}$$

For the 1D-case the point of maximal separation from the nearest microlens centers, has distance *D/2* from the microlens centers. The ratio of *R* to this value is called the *spacing factor* and is denoted by κ. That is,

$$\kappa := \frac{2\,R}{D}. \tag{15}$$

Hence,

$$\kappa_o = \sqrt{2} \approx 1.41 , \qquad \kappa_h = \sqrt{1 + tan^2(\pi/6)} \approx 1.15 . \qquad (16)$$

The multiplicity at a distance $a$ from the microlens plane is therefore given by

$$M = \frac{|a|}{\kappa B} . \qquad (17)$$

Since $|a| = \kappa B M,$ a smaller $\kappa$ is preferable. Hence, a hexagonal microlens array is preferable to an orthogonal microlens array.

If the microlenses are not densely packed in a 1D-array, but have a distance of $C$ between their centers, the distance $v_1$ of the total covering limit plane $M_1$ from the microlens plane has the following relation:

$$\frac{B}{D/2} = \frac{B+v_1}{D/2+C/2} \quad \Leftarrow \quad v_1 = B\frac{C}{D} = \gamma B , \qquad (18)$$

where $\gamma: = C/D$ is the ratio between spacing and size of the microlenses. For a 2D microlens array the distance of the covering plane of multiplicity $M$ is given by

$$v_M = \kappa \gamma B M . \qquad (19)$$

The multiplicity at a distance a from the microlens plane is therefore given by

$$M = \frac{|a|}{\kappa \gamma B} . \qquad (20)$$

If the central lens in Figure 6 is removed, the distance between neighbouring lenses it doubled, i.e. $\gamma = 2$. Hence, the multiplicity is in this case only half of the multiplicity for the densely packed lenses, at the same distance $a$.

Parallax

At a plane with multiplicity $M$ only $1/M$ of each microimage is needed to render an image over the whole plane without gaps. For example, at $M = 2$ only half of each microimage is needed to render a full image, which implies that two completely distinct full images can be rendered. The effect is a change in the apparent point of view. Due to this effect 3D-information about the scene can be recovered just as for a standard stereo camera system.

The amount of parallax on the image plane between the two extreme views is given by

$$\Delta = D \left(1 - \max\left[\frac{1}{M}, \frac{1}{N}\right]\right) , \qquad (21)$$

where $N = D/p$ is the number of pixels of size $p$ in a microimage of size $D$. The parallax angle $\Delta_\alpha$ is therefore given by

$$\Delta_\alpha = 2 \tan^{-1}\left(\frac{\Delta}{2B}\right) , \qquad (22)$$

where $B$ denotes again the distance of the microlens array to the image plane.

Furthermore, the relative parallax $\Delta_r$ is defined as

$$\Delta_r := \frac{\Delta}{D} = 1 - \max\left[\frac{1}{M}, \frac{1}{N}\right]. \tag{23}$$

With respect to Figure 6, it follows that if the central lens is removed the multiplicity at some position a is reduced, which reduces the parallax.

$\Delta$ can be written as a function of a by substituting equation (20) into equation (21), which results in

$$\Delta = D\left(1 - \max\left[\frac{\kappa \gamma B}{|a|}, \frac{1}{N}\right]\right). \tag{24}$$

Similarly, the relative parallax is

$$\Delta_r = 1 - \max\left[\frac{\kappa \gamma B}{|a|}, \frac{1}{N}\right]. \tag{25}$$

Note that the equations for $\Delta$, $\Delta_r$ and $\Delta_a$ are only valid for $|a| \geq v_1$. The distance $\ell_{max}$ from the microlens plane, where the parallax is maximal, is given by

$$\ell_{max} = \kappa \gamma B N = \kappa \gamma \frac{B D}{p}. \tag{26}$$

Effective Resolution

In order to define the effective resolution of a plenoptic camera, consider again Figure 2 in the context of Figure 5. In this context, point $X_0$ in Figure 2 can be regarded as a main image generated by the main lens in Figure 5. The effective pixel size of the plenoptic camera is therefore $s_a$ as compared to the real pixel size p if the image plane had been placed at the position of the main image. The effective resolution of the plenoptic camera is therefore

$$N_e := \frac{H}{|s_a|}, \tag{27}$$

where H is the total extent of the image plane. The total resolution $N_t$ is therefore given by

$$N_t := \frac{H}{p}, \tag{28}$$

where p is again the pixel size. The effective resolution ratio of a plenoptic camera may therefore be defined as

$$\varepsilon(a) := \frac{N_e}{N_t} = \frac{p}{|s_a|}. \tag{29}$$

The relation between $s_c$ and s can be found by considering similar triangles. It is given by

$$s_c = s\,\frac{a}{B}. \tag{30}$$

The effective resolution ratio of a plenoptic camera can therefore be written as

$$\varepsilon(a) = \frac{p}{|s_a|} = \frac{B}{|a|}\,\varepsilon_L(a)\,. \qquad (31)$$

This equation is only valid if $|a| \geq v_1$, where $v_1$ is the total covering limit distance given in equation (18). The ERR of a plenoptic camera behaves therefore like the ERR of a single lens, which is attenuated by $1/|a|$.

The digital imaging system for synthesizing an image using data recorded with a plenoptic camera comprises therefore a photosensor line having a plurality of photosensors; an optics arrangement, including a main lens 10 and a microlens set-up 12 arranged in at least a line of focus of the main lens 10, to direct light from an object 30 to the photosensor line via the main lens 10 and the microlens line set-up 12 thereby generating micro images 16 for each micro lens; a control arrangement to set a relative distance between the photosensor line and the microlens set-up; wherein, for a set of light rays passing through a particular portion of the focal line of the main lens 10, a plurality of the photosensors are arranged in an image plane 18 to sense different ones of the set of light rays that concurrently arrive at the particular portion of the focal line at different angles of incidence, and to output light data characterizing the sensed light rays; and a processor in a computer set-up programmable to provide image data characterizing a synthesized image as a function of the light sensed at different photosensors, the position of the photosensors relative to the microlens set-up 12, and an angle of incidence of the sensed light upon the focal line of the main lens (10), wherein the focal lengths of each of the microlenses over the at least one-dimensional set-up differ from each other.

Multiple focus Plenoptic Camera

It was noted before that removing every second microlens from the array will only push out the total covering plane and reduce the parallax at a particular distance from the microlens plane. However, it does not reduce the effective resolution at particular position. This is the concept introduced in this text, which enables the design of plenoptic cameras with improved properties, like an extended depth of field. A plenoptic camera that uses a microlens array with microlenses that have different focal lengths will be called a *multiple focus plenoptic camera*.

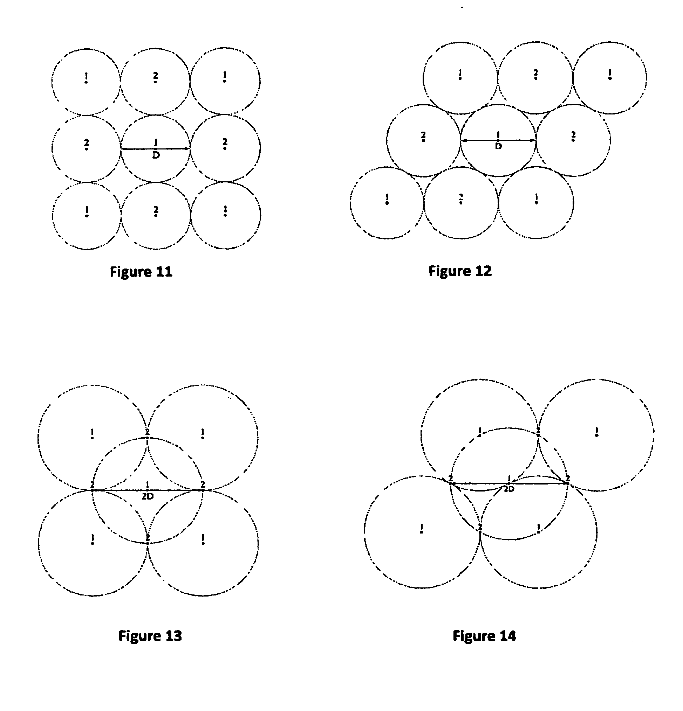

Figure 11 and Figure 12 show the distribution of microlenses of types 1 and 2 in an orthogonal and hexagonal microlens array, respectively. The microlenses of types 1 and 2 only differ in their focal lengths, while all other parameters are kept constant.

The product of the spacing factor $\kappa$ and the spacing ratio $\gamma$ for a multiple focus plenoptic camera with two different types of lenses, is the same for the orthogonal and the hexagonal case. In both cases $\kappa\,\gamma = 2$, as can be seen in Figure 13 and Figure 14.

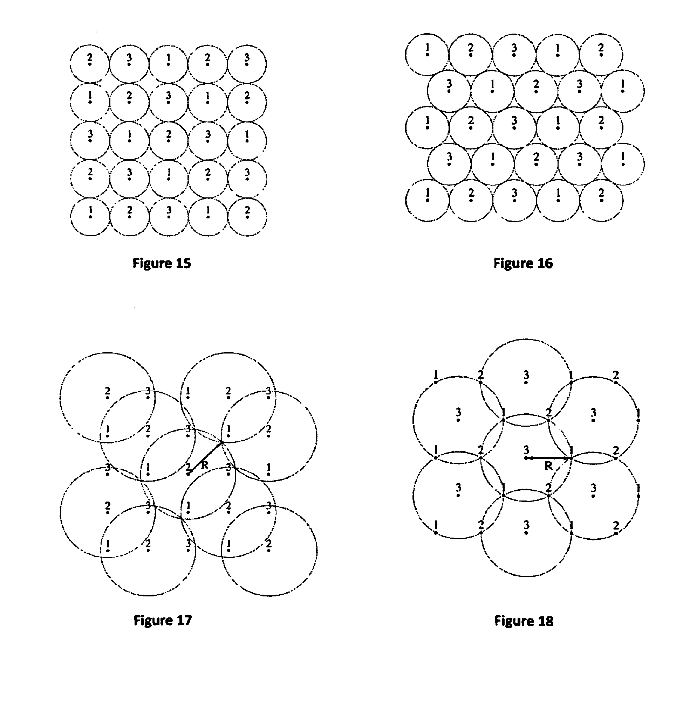

If three different types of microlenses are to be used the mixing of the lens types in an orthogonal and a hexagonal array are shown in Figure 15 and Figure 16, respectively. The product of the spacing factor $\kappa$ and the spacing ratio $\gamma$ for a multiple focus plenoptic camera with *three* different types of lenses, is different for the orthogonal and the hexagonal case. In the orthogonal case

$$\kappa\,\gamma = 2\,\sqrt{2}\,\frac{5}{6} \approx 2.36\,,$$

while in the hexagonal case

$$\kappa\,\gamma = 2\,.$$

This is shown in Figure 17 and Figure 18, respectively. Hence, in a hexagonal microlens array the total covering plane has the same distance from the microlens plane, independent of whether two or three different types of microlenses are used. It is thus advantages to use three different types of microlenses.

Example Multiple Focus Plenoptic Camera

Note that in all examples the ERR is shown only for the area inside the camera. How this ERR is mapped to object space depends on the focal length and the position of the focal plane of the main lens. The spacing factor $\kappa$ used

in the following examples, is that of a hexagonal microlens array.

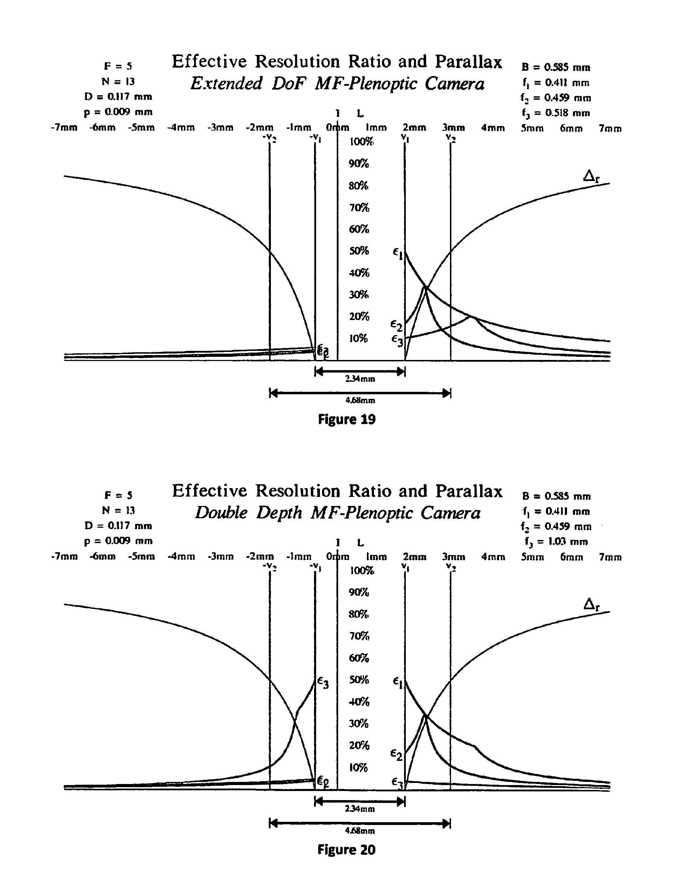

Figure 19 shows the effective resolution ratio and parallax of a multiple focus plenoptic camera that uses three different types of microlenses. Here the focal lengths of the three types of microlenses are tuned such that the resultant ERR is close to the optimum $\varepsilon(a) = B/|a|$, i.e. $\varepsilon_L(a) = 1$, for a large range (cf. equation (29)).

Figure 20 shows the effective resolution ratio and parallax of multiple focus plenoptic camera that has an extended high effective resolution area in front of and behind the image plane. This has the effect that elements on the plane at $v_1$ and on the plane at $-v_1$ can be reconstructed with a high effective resolution. This could, for example, be used if an object has two parallel planes at different depths that need to be brought into focus simultaneously.

Note that in principle an arbitrary number of different focal lengths for different microlenses could be used. Also a nearly continuous distribution of focal lengths over the microlens array could improve the overall performance of the plenoptic camera.

Image Rendering for Multiple Focus Planoptic Camera

The image rendering algorithm for the multiple focus plenoptic camera is much the same as the one described before. The difference is that in the selection of the microlenses used to evaluate the color value of a point, the distance of the point from the microlens plane has to be taken into account. For each distance there is one set of microlenses that can be used to optimally evaluate the color value.

**Depth Estimation**

The depth of an image point can be estimated by using different parallax images of a plenoptic camera and applying well known algorithms from the literature for depth estimation from a multiple camera setup. In this case, a plenoptic camera is treated like a set of separate cameras.

The method presented here exploits the particular imaging properties of the plenoptic camera. To estimate the depth of a point $(x,y)$ on a virtual image plane, the following procedure is used:

1. Select a set of distances $\{z_i\}$ from the microlens plane, which could be a solution to the depth estimate.
2. For each depth hypothesis $z_i$ do the following:

   a.) Find the pixel coordinates $(u_j,v_j)$ on the image plane, of those pixels whose color value would contribute to the point $(x,y)$ in the rendering algorithm.
   b.) Extract the sub-images $I_j$ in a small sized neighbourhood about each $(u_j,v_j)$.
   c.) Evaluate the correlation of the $I_j$ with each other, and the correlation within each of the $I_j$.
   d.) Record the correlation values for the depth $z_i$. If the correlation within the $I_j$ is high, the sub-image consists of similar color values. If this correlation is above a certain threshold, the depth of the corresponding point $(x,y)$ cannot be estimated at this step.

3. The depth $z_i$ with the highest correlation between the corresponding sub-images $I_j$, is the most probable depth of the point $(x,y)$.
4. Interpolate the depth values between the points where the depth could be estimated, such that a dense depth map is created.

Alternative Plenoptic Camera Designs

In the following two different example plenoptic camera designs are presented. With the methodology presented in this text, it is shown that the standard plenoptic camera as invented by Lippmann in 1908 and discussed by Yi-Ren Ng, and the "focused plenoptic camera" as developed by T. Georgiev and A. Lumsdaine, can be described as special cases of a general plenoptic camera theory. This unifying theory leads in particular to the discovery that using varying focal lenghts over the microlens array, the overall effective resolution of the plenoptic camera can be improved.

Standard Plenoptic Camera

In the state of the art plenoptic camera design as patented by Lippmann in 1908 and again by Yi-Ren Ng et al. in 2007 (WO 2007/092581 A2 cited above) the focal length of the microlenses is set equal to the distance of the microlens plane to the image plane, i.e. $B = f$.

For the case $B = f$, equation (9) becomes

$$\varepsilon_L(a) = \frac{1}{\max\left[\left|N\left(B\left(\frac{1}{B}-\frac{1}{a}\right)-1\right)\right|,1\right]} = \min\left[\frac{|a|}{N\,B},\ 1\right]. \tag{32}$$

Hence, the effective resolution ratio for the plenoptic camera becomes

$$\varepsilon(a) = \frac{B}{|a|}\,\varepsilon_L(a) = \min\left[\frac{1}{N},\ \frac{B}{|a|}\right]. \tag{33}$$

That is, for all distances on from the microlens plane where $|a| \leq N\,B$, the ERR is constant and takes on the value $1/N$. From equation (29) it follows that the effective resolution $N_e$ is in this case

$$N_e = N_t\,\varepsilon(a) = \frac{N_t}{N} =: N_L, \tag{34}$$

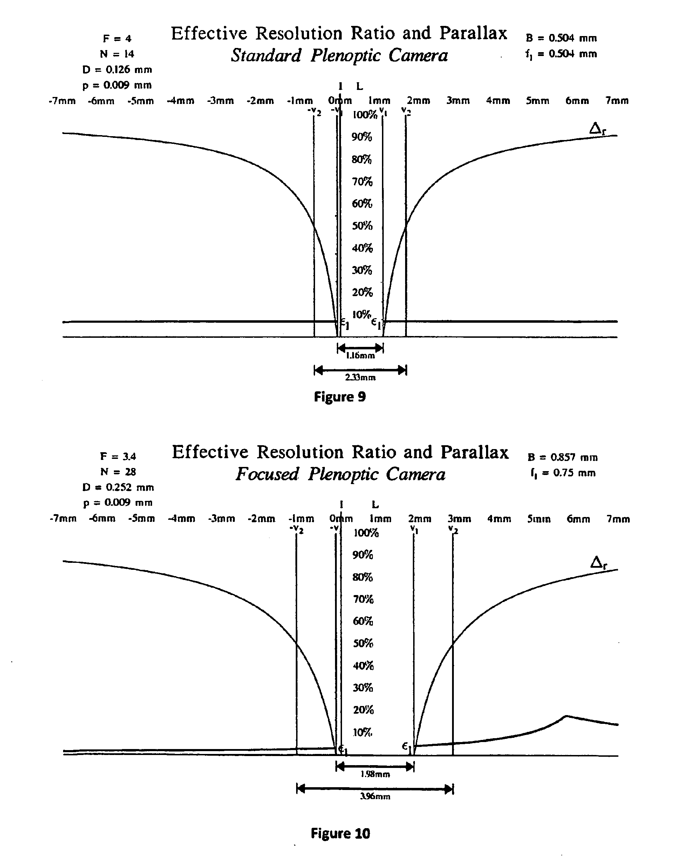

where $N_L$ is the number of microlenses along one dimension of the microlens array. This is exactly what has been reported in the literature, i.e. the resolution of a standard plenoptic camera is just the number of lenses in the microlens array. Figure 9 shows the effective resolution ratio and the parallax of this setup.

Focused Plenoptic Camera

Andrew Lumsdaine and Todor Georgiev reported on a plenoptic camera that it has a higher resolution than the standard plenoptic camera of Lippmann and Ng. Before that, it was believed that a lens array that is external to a camera achieves a similar goal as the plenoptic camera with a microlens array. The ERR for a typical focused plenoptic camera as devised by Lumsdaine and Georgiev is shown in Figure 10.

Multiple Microlens Array Plenoptic Camera

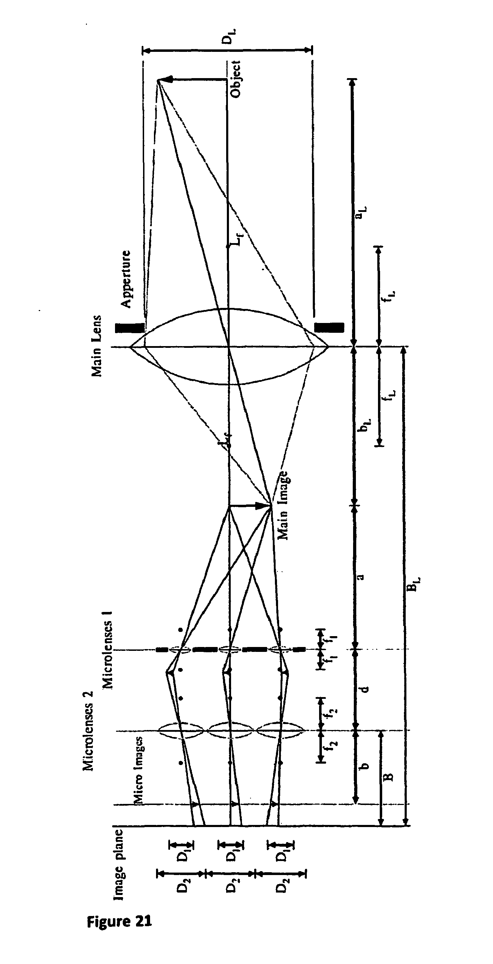

In addition to the multiple focus plenoptic camera, the functionality of a plenoptic camera can be extended further by using not just a single microlens array, but a number of microlens arrays along the optical axis. An example of such a construction with two microlens arrays is shown schematically in Figure 21. In this example the two microlens arrays consist of biconvex microlenses, whereby the microlenses in the microlens array 1 have a smaller diameter than the microlenses in microlens array 2, and are surrounded by an opaque aperture. In general, any combination of lens types with an appropriate microaperture array is possible and can extend the functionality of the plenoptic camera.

In the construction shown in Figure 21 the separation $B$ between the microlens array 2 and the image plane, and the separation d between the two microlens arrays is kept variable by an appropriate mechanical construction. By varying $B$ and d in an appropriate fashion, it can be ensured that microimages of constant diameter $D_2$ can be generated for varying F-numbers of the main lens system. In this way, the multiple microlens array plenoptic camera can achieve a constant effective resolution also when used with zoom lenses with varying F-numbers, or with different fixed focal length lenses that typically have different F-numbers.

For specialists schooled in the art, it is also straight forward to extend the basic example shown in Figure 21 to combinations of more microlens arrays with microlenses of different types, to achieve the same effect. One example for being of a different type is that each of the microlenses in a multiple microlens array plenoptic camera can comsist of microlenses of different focal lengths.

An advantageous Digital imaging system has the microlenses of the microlens set-up 12 arranged in a two-dimensional array. However, e.g. for scanning an object transported alongside the sensor on e.g. a carrier band a line sensor might suffice. But also for this application the photosensors can be arranged in an two-dimensional array in the image plane 18.

A digital imaging method for use with one- or two-dimensional arrays for the microlens set-up and the photosensor array for synthesizing an image from a set of light rays, the method comprising consequently the following steps:

- collecting a set of light rays in a main lens and a photosensor array to output light data characterizing the set of light rays;
- directing by a microlens array, positioned between the main lens and the photosensor array the set of light rays from the main lens to the photosensor array;

- setting the photosensor array in a positioning arrangement relative to the microlens array to facilitate selective detection of directional characteristics of light collected by the photosensor array; and

- computing with an image data processor a synthesized refocused image using the light data as a function of the arrangement and relative position of the main lens, microlens array and photosensor array, wherein the synthesized refocused image expresses a virtual redirection of the set of light rays as collected by the photosensor array, characterized by

- selecting the set of microlenses which do actually see the point at $(x,y)$ by finding which microlenses have centers that fall inside a circle of radius $\tau$ about the orthographic projection of $(x,y)$ onto the microlens plane where $\tau$ is

$$\tau = \frac{z\,D}{2\,B}.$$

calculating for each of these microlenses the pixel position on the image plane onto which the point $(x,y)$ is projected by the respective microlens, and displaying the pixels as an image.

This method may render an imagine not only from one focal plane, but rather the rendering algorithm is in particular characterized by the ability to render an image of an arbitrarily shaped focal surface being different from a focal plane.

Further the digital imaging method for synthesizing an image from a set of light rays may do a weighting to find the final color value as a weighted average of the color values on the image plane at the pixel positions calculated in the previous step.

Any digital imaging method for synthesizing an image from a set of light rays as set might then take the weight from calibration data that gives the amount of intensity attenuation at each of the pixel positions for the projection of point $(x,y,z)$. This allows for a digital imaging method for synthesizing an image from a set of light rays as set forth in claim of the preceding claims, which selects a set of distances $\{z_i\}$ from the microlens plane, and for each depth hypothesis $z_i$ repeating the following:

- find the pixel coordinates $(u_j, v_j)$ on the image plane, of those pixels whose color value would contribute to the point $(x,y)$ in the rendering algorithm,
- extract the sub-images $I_j$ in a small sized neighbourhood about each $(u_j, v_j)$,
- evaluate the correlation of the $I_j$ with each other, and the correlation within each of the $I_j$,
- record the correlation values for the depth $z_i$, so that in case the correlation within the $I_j$ is high, the sub-image consists of similar color values, and
  in case this correlation is above a certain threshold, the depth of the corresponding point $(x,y)$ is not be estimated at this step, wherein the depth $z_i$ with the highest correlation between the corresponding sub-images $I_j$, is the most probable depth of the point $(x,y)$., interpolate the depth values between the points where the depth could be estimated, to create a dense depth map.

Further Applications

The above described methods of the multiple focus plenoptic camera and the multiple microlens array plenoptic camera or combinations thereof can also be applied to one-dimensional light sensing devices, like line cameras, multi-line cameras, hand-held scanners, flat -bed scanners, or fotocopying machines.

In the case of a single line camera, a hand-held scanner, a flat-bed scanner or a fotocopying machine, one or a number of one-dimensional arrays of cylindrical lenses placed in the optical path of the light receptors would suffice, although other types of lenses are also possible. The advantage of such a construction over a standard device is that the surface that is scanned need not be flat and aligned with the scan plane. That is, non-planar surfaces can be brought into focus everywhere and also the 3D-form of the recorded surface can be recovered. The corresponding rendering and depth estimation algorithms are the same as before, with the simplification that only microlenses in one dimension contribute to a pixel.

A multi-line plenoptic camera has a number of parallel lines of light receptors with one or a number of microlens lines placed in the optical path. When moving an object underneath such a camera or when moving the camera over an object while recording images in particular time intervals, a data set equivalent to that of a two-dimensional plenoptic camera can be constructed. Again, the microlenses in the one-dimensional microlens line may have different focal lengths and/or a number of such microlens lines may be placed along the optical path. The advantage of such a construction is that an image with a very high resolution can be generated.

**Claims**

1. A digital imaging method for use with a one- or two-dimensional microlens array for a microlens set-up arranged at a microlens plane and a photosensor array arranged in an image plane for synthesizing an image from a set of light rays, the method comprising the following steps:

   - collecting a set of light rays in a main lens and the photosensor array to output light data characterizing the set of light rays;
   - directing by the microlens array, positioned between the main lens and the photosensor array, the set of light rays from the main lens to the photosensor array;
   - setting the photosensor array in a positioning arrangement relative to the microlens array to facilitate selective detection of directional characteristics of light collected by the photosensor array; and
   - computing with an image data processor a synthesized refocused image at a virtual image plane using the light data as a function of the arrangement and relative position of the main lens, microlens array and photosensor array,
   wherein the synthesized refocused image expresses a virtual redirection of the set of light rays as collected by the photosensor array, **characterized by**
   - selecting the set of microlenses which do actually see a point at a position ($x,y$) on the virtual image plane by finding which microlenses have centers that fall inside a circle of radius r about the orthographic projection of the position ($x,y$) onto the microlens plane where r is

$$r = \frac{z\,D}{2\,B}$$

   with z: distance of the virtual image plane from the microlens plane, D: microlens diameter and B: distance between the microlens array and the image plane, calculating for each of these microlenses the pixel position on the image plane onto which the point from the virtual image plane is projected by the respective microlens, and displaying the pixels as the synthesized refocused image.

2. A digital imaging method for synthesizing an image from a set of light rays as set forth in claim 1, the method weighting a final color value of the point from the virtual image plane as a weighted average of the color values on the image plane at the pixel positions calculated in the calculating step.

3. A digital imaging method for synthesizing an image from a set of light rays as set forth in claim 2, wherein the weights are taken from calibration data that gives the amount of intensity attenuation at each of the pixel positions for the projection of point ($x, y,z$).

4. A digital imaging method for synthesizing an image from a set of light rays as set forth in one of the preceding claims, comprising

   - selecting a set of distances $\{z_i\}$ from the microlens plane, and for each depth hypothesis $z_i$ repeating the following:
   - find the pixel coordinates ($u_j, v_j$) on the image plane, of those pixels whose color value would contribute to the point (x,y) in the rendering algorithm,
   - extract the sub-images $I_j$ in a small sized neighbourhood about each ($u_j, v_j$),
   - evaluate the correlation of the $I_j$ with each other, and the correlation within each of the $I_j$,
   - record the correlation values for the depth $z_i$, so that in case the correlation within the $I_j$ is high, the sub-image consists of similar color values, and
   in case this correlation is above a certain threshold, the depth of the corresponding point ($x, y$) is not to be estimated at this step,
   wherein the depth $z_i$ with the highest correlation between the corresponding sub-images $I_j$, is the most probable depth of the point (x,y),
   - interpolate the depth values between the points where the depth could be estimated, to create a dense depth map.

5. A digital imaging method for synthesizing an image from a set of light rays as set forth in one of the preceding claims, wherein

   - the focal lengths of the microlenses over the microlens array are varied.

**Patentansprüche**

1. Digitales Bildgebungsverfahren zum Gebrauch mit einem ein- oder zwei-dimensionalen Mikrolinsen-Array für eine Mikrolinsen-Einrichtung, die in einer Mikrolinsen-Ebene angeordnet ist, und einem Photosensor-Array, das in einer Bildebene angeordnet ist, um ein Bild aus einem Satz von Lichtstrahlen zu synthetisieren, wobei das Verfahren die folgenden Schritte umfasst:

   - Auffangen eines Satzes von Lichtstrahlen in einer Hauptlinse und dem Photosensor-Array, um Lichtdaten auszugeben, welche den Satz von Lichtstrahlen charakterisieren;
   - Richten des Satzes von Lichtstrahlen von der Hauptlinse durch das Mikrolinsen-Array, das zwischen der Hauptlinse und dem Photosensor-Array positioniert ist, zu dem Photosensor-Array;
   - Einstellen des Photosensor-Arrays in einer Positionierungsanordnung relativ zu dem Mikrolinsen-Array, um eine selektive Detektion von Richtungscharakteristiken von Licht zu erleichtern, das durch das Photosensor-Array gesammelt wird; und
   - Berechnen eines synthetisierten refokussierten Bildes in einer virtuellen Bildebene mit einem Bilddatenprozessor, wobei die Lichtdaten als eine Funktion der Anordnung und der relativen Position der Hauptlinse, des Mikrolinsen-Arrays und des Photosensor-Arrays verwendet werden,
wobei das synthetisierte refokussierte Bild eine virtuelle Umlenkung des Satzes von Lichtstrahlen ausdrückt, wie sie durch das Photosensor-Array aufgenommen wurden,
**gekennzeichnet durch**
   - Auswählen des Satzes von Mikrolinsen, die aktuell einen Punkt an einer Position (x, y) auf der virtuellen Bildebene sehen, indem gefunden wird, welche Mikrolinsen Zentren haben, die innerhalb eines Kreises des Radius r um die orthographische Projektion der Position (x, y) auf die Mikrolinsen-Ebene fallen, wobei r ist

$$r = \frac{zD}{2B}$$

wobei z: Abstand der virtuellen Bildebene von der Mikrolinsen-Ebene, D: Mikrolinsen-Durchmesser und B: Abstand zwischen dem Mikrolinsen-Array und der Bildebene,
   - für jede dieser Mikrolinsen, Berechnen der Pixelposition auf der Bildebene, auf die der Punkt von der virtuellen Bildebene **durch** die entsprechende Mikrolinse projiziert wird, und
   - Anzeigen der Pixel als das synthetisierte refokussierte Bild.

2. Digitales Bildgebungsverfahren zum Synthetisieren eines Bildes aus einem Satz von Lichtstrahlen gemäß Anspruch 1, wobei das Verfahren einen finalen Farbwert des Punkts von der virtuellen Bildebene als ein gewichtetes Mittel der Farbwerte auf der Bildebene an den Pixelpositionen wichtet, die in dem Berechnungsschritt berechnet worden sind.

3. Digitales Bildgebungsverfahren zum Synthetisieren eines Bildes aus einem Satz von Lichtstrahlen gemäß Anspruch 2, wobei die Gewichte von Kalibrierungsdaten genommen werden, welche die Menge der Intensitätsschwächung an jeder der Pixelpositionen für die Projektion vom Punkt (x, y, z) geben.

4. Digitales Bildgebungsverfahren zum Synthetisieren eines Bildes aus einem Satz von Lichtstrahlen gemäß einem der vorhergehenden Ansprüche, umfassend

   - Auswählen eines Satzes von Abständen {$z_i$} von der Mikrolinsen-Ebene, und, für jede Tiefenhypothese $z_i$ Wiederholen des Folgenden:

- Finden der Pixelkoordinaten *(u$_j$, v$_j$)* auf der Bildebene von den Pixeln, deren Farbwert zu dem Punkt (x, y) in dem Wiedergabe-Algorithmus beitragen würde,
- Extrahieren der Sub-Bilder I$_j$ in einer Nachbarschaft kleiner Größe um jedes (u$_j$, v$_j$),
- Bewerten der Korrelation der *I$_j$* miteinander und der Korrelation innerhalb jeder der *I$_j$*,
- Aufzeichnen de Korrelationswerte für die Tiefe z$_i$, so dass, falls die Korrelation innerhalb der I$_j$ hoch ist, das Sub-Bild aus ähnlichen Farbwerten besteht, und falls diese Korrelation oberhalb eines bestimmten Schwellwerts ist, die Tiefe des entsprechenden Punkts (x, y) bei diesem Schritt nicht bestimmt werden soll, wobei die Tiefe z$_i$ mit der höchsten Korrelation zwischen den entsprechenden Sub-Bildern I$_j$ die wahrscheinlichste Tiefe des Punkts (*x, y*) ist,
- Interpolieren der Tiefenwerte zwischen den Punkten, wo die Tiefe bestimmt werden konnte, um eine dichte Tiefenkarte zu erzeugen.

5. Digitales Bildgebungsverfahren zum Synthetisieren eines Bildes aus einem Satz von Lichtstrahlen gemäß einem der vorhergehenden Ansprüche, wobei

   - die Fokallängen der Mikrolinsen über das Mikrolinsen-Array variiert sind.


**Revendications**

1. Procédé d'imagerie numérique destiné à être utilisé avec un réseau unidimensionnel ou bidimensionnel de micro-lentilles pour un agencement de micro-lentilles agencé dans un plan de micro-lentilles et un réseau de photocapteurs agencé dans un plan d'image pour synthétiser une image à partir d'un ensemble de rayons lumineux, le procédé comprenant les étapes suivantes consistant à :

   - collecter un ensemble de rayons lumineux dans une lentille principale et le réseau de photocapteurs pour délivrer des données de lumière caractérisant l'ensemble de rayons lumineux,
   - diriger, par le réseau de micro-lentilles, positionné entre la lentille principale et le réseau de photocapteurs, l'ensemble de rayons lumineux de la lentille principale vers le réseau de photocapteurs ;
   - placer le réseau de photocapteurs en un agencement de positionnement par rapport au réseau de micro-lentilles pour faciliter la détection sélective des caractéristiques directionnelles de la lumière collectée par le réseau de photocapteurs ; et
   - calculer, par un processeur de données d'image, une image refocalisée synthétisée dans un plan d'image virtuelle en utilisant les données de lumière en fonction de l'agencement et de la position relative de la lentille principale, du réseau de micro-lentilles et du réseau de photocapteurs,
   dans lequel l'image refocalisée synthétisée exprime une redirection virtuelle de l'ensemble des rayons lumineux tels que collectés par le réseau de photocapteurs, **caractérisé par** l'étape consistant à :
   - sélectionner l'ensemble de micro-lentilles qui voient réellement un point à une position (x, y) dans le plan d'image virtuelle en trouvant quelles micro-lentilles ont des centres qui tombent à l'intérieur d'un cercle de rayon r autour de la projection orthographique de la position (x, y) sur le plan de micro-lentilles, où r est

$$r = \frac{z\,D}{2\,B}$$

   avec z : distance du plan d'image virtuelle par rapport au plan de micro-lentilles, D : diamètre des micro-lentilles, et B : distance entre le réseau de micro-lentilles et le plan d'image,
   calculer, pour chacune de ces micro-lentilles, la position de pixel sur le plan d'image sur lequel le point du plan d'image virtuelle est projeté par la micro-lentille respective, et
   afficher les pixels en tant qu'image refocalisée synthétisée.

2. Procédé d'imagerie numérique pour synthétiser une image à partir d'un ensemble de rayons lumineux selon la revendication 1, le procédé pondérant une valeur de couleur finale du point du plan d'image virtuelle en tant que moyenne pondérée des valeurs de couleur sur le plan d'image aux positions de pixels calculées à l'étape de calcul.

3. Procédé d'imagerie numérique pour synthétiser une image à partir d'un ensemble de rayons lumineux selon la revendication 2, dans lequel les coefficients de pondération sont pris parmi des données d'étalonnage qui donnent la quantité d'atténuation d'intensité à chacune des positions de pixels pour la projection d'un point (x, y, z).

4. Procédé d'imagerie numérique pour synthétiser une image à partir d'un ensemble de rayons lumineux selon l'une des revendications précédentes, consistant à :

- sélectionner un ensemble de distances {$z_i$} par rapport au plan de micro-lentilles, et, pour chaque hypothèse de profondeur $z_i$, répéter les étapes suivantes consistant à :
- trouver les coordonnées de pixel ($u_j$, $v_j$) dans le plan d'image des pixels dont la valeur de couleur contribuerait au point (x, y) dans l'algorithme de rendu,
- extraire les sous-images $I_j$ dans un voisinage de petite taille autour de chacune des coordonnés ($u_j$, $v_j$),
- évaluer la corrélation des sous-images $I_j$ les unes avec les autres, et la corrélation dans chacune des sous-images $I_j$,
- enregistrer les valeurs de corrélation pour la profondeur $z_i$, de sorte que, dans le cas où la corrélation dans la sous-image $I_j$ est grande, la sous-image consiste en des valeurs de couleur similaires, et
dans le cas où cette corrélation est au-dessus d'un certain seuil, la profondeur du point (x, y) correspondant ne doit pas être estimée à cette étape,
dans lequel la profondeur $z_i$ avec la corrélation la plus grande entre les sous-images $I_j$ correspondantes est la profondeur la plus probable du point (x, y),
- interpoler les valeurs de profondeur entre les points où la profondeur pourrait être estimée, pour créer une carte de profondeurs dense.

5. Procédé d'imagerie numérique pour synthétiser une image à partir d'un ensemble de rayons lumineux selon l'une des revendications précédentes, dans lequel

- les longueurs focales des micro-lentilles sur le réseau de micro-lentilles sont variées.

**Figure 1**

**Figure 2**

**Figure 3**

**Figure 4**

Figure 5

EP 2 244 484 B1

19

image | plane

M₋₂    M₋₁    M₁    M₂

B    B

2B    2B

**Figure 6**

**Figure 7**    **Figure 8**

F = 4
N = 14
D = 0.126 mm
p = 0.009 mm

**Effective Resolution Ratio and Parallax**
*Standard Plenoptic Camera*

B = 0.504 mm
f₁ = 0.504 mm

**Figure 9**

F = 3.4
N = 28
D = 0.252 mm
p = 0.009 mm

**Effective Resolution Ratio and Parallax**
*Focused Plenoptic Camera*

B = 0.857 mm
f₁ = 0.75 mm

**Figure 10**

**Figure 11**

**Figure 12**

**Figure 13**

**Figure 14**

**Figure 15**

**Figure 16**

**Figure 17**

**Figure 18**

F = 5
N = 13
D = 0.117 mm
p = 0.009 mm

# Effective Resolution Ratio and Parallax
## *Extended DoF MF-Plenoptic Camera*

B = 0.585 mm
$f_1$ = 0.411 mm
$f_2$ = 0.459 mm
$f_3$ = 0.518 mm

-7mm  -6mm  -5mm  -4mm  -3mm  -2mm  -1mm  0mm  1mm  2mm  3mm  4mm  5mm  6mm  7mm

1   L

$\Delta_r$

$\epsilon_1$
$\epsilon_2$
$\epsilon_3$
$\epsilon_0$

100%
90%
80%
70%
60%
50%
40%
30%
20%
10%

2.34mm

4.68mm

**Figure 19**

F = 5
N = 13
D = 0.117 mm
p = 0.009 mm

# Effective Resolution Ratio and Parallax
## *Double Depth MF-Plenoptic Camera*

B = 0.585 mm
$f_1$ = 0.411 mm
$f_2$ = 0.459 mm
$f_3$ = 1.03 mm

-7mm  -6mm  -5mm  -4mm  -3mm  -2mm  -1mm  0mm  1mm  2mm  3mm  4mm  5mm  6mm  7mm

1   L

$\Delta_r$

$\epsilon_3$
$\epsilon_0$
$\epsilon_1$
$\epsilon_2$
$\epsilon_3$

100%
90%
80%
70%
60%
50%
40%
30%
20%
10%

2.34mm

4.68mm

**Figure 20**

24

Figure 21

**EP 2 244 484 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006039486 A
- WO 2007092581 A2, Yi-Ren Ng
- US 20090041448 A1